## Europäisches Patentamt

## European Patent Office

## Office européen des brevets

(11) Veröffentlichungsnummer: **0 170 733**
**A1**

(12) # EUROPÄISCHE PATENTANMELDUNG

(21) Anmeldenummer: 84116453.6

(22) Anmeldetag: 28.12.84

(51) Int. Cl.⁴: **B 60 N 1/12, B 60 R 22/10**

(30) Priorität: 15.06.84 DE 3422340

(43) Veröffentlichungstag der Anmeldung: **12.02.86**
**Patentblatt 86/7**

(84) Benannte Vertragsstaaten: **AT BE CH DE FR GB IT LI LU NL SE**

(71) Anmelder: **Curt Würstl Vermögensverwaltungs GmbH & Co. KG, Schaumbergstrasse 8, D-8670 Hof (DE)**

(72) Erfinder: **Hofmann, Gerhard, Wurlitz 28, D-8673 Rehau (DE)**

(74) Vertreter: **Diehl, Hermann O. Th., Dr. et al, Diehl & Partner Flüggenstrasse 17, D-8000 München 19 (DE)**

(54) **Kinder-Sicherheitssitz.**

(57) Der Sitz (1) enthält nach vorne weisende Seitenwände, die als Armlehnen (6, 7) ausgebildet sind und eine Führung für ein abnehmbares prallkissenartig ausgebildetes Tischteil (15) bilden, das sich zwischen den Armlehnen (6, 7) erstreckt und längs desselben verschiebbar ist. Die miteinander in Eingriff stehenden Führungen (17, 14) an dem Tischteil (15) und den Armlehnen (6, 7) legen die Verschiebungsbahn des Tischteils (15) längs der Armlehnen (6, 7) derart fest, daß der minimale lichte Abstand (A) zwischen der Unterseite (32) des Tischteils (15) und der die Beine bzw. das Gesäß des Kindes aufnehmenden Sitzfläche (11) umso größer ist, je weiter das Tischteil (15) nach vorne verschoben ist. Das Tischteil (15) kann an seinem zwischen den Armlehnen (6, 7) herabgezogenen Bereich (56) zumindest ein entfernbares Abstandselement (62) enthalten. Das Tischteil (15) ist als quaderförmiges, eigensteifes Polster ausgebildet, das eine von dessen Vorderseite (25) ausgehende und über die gesamte Breite desselben verlaufende Aussparung (26) enthält, zur Aufnahme eines Gurtbandstükkes, welches den Beckengurtteil (66) eines Sicherheitsgurtes des Fahrzeugs bildet oder mit diesem verbindbar ist. An dem vorderen Randbereich zumindest einer der an beiden Seiten der Rückenstütze (3) vorstehenden Seitenwände (4, 5) ist eine höhenverstellbare Führung (45) zur losen Aufnahme eines Schultergurtbandes (70) vorgesehen.

Kinder-Sicherheitssitz

Beschreibung

Die Erfindung betrifft einen Kinder-Sicherheitssitz gemäß
dem Oberbegriff des Hauptanspruchs.

Die Erfindung befaßt sich mit einem Kinder-Sicherheitssitz im allgemeinsten Sinne, der eine Sitzschale enthalten kann, eine Kopf- und eine Rückenstütze, der jedoch
in jedem Falle nach vorne weisende Seitenwände aufweist,
die als Armlehnen ausgebildet sind oder in solchen münden. Die nach oben gerichteten Flächen der Armlehnen, vorzugsweise deren Oberkanten, bilden Auflagebereiche für
ein abnehmbares prallkissenartig ausgebildetes Tischteil,
das sich zwischen den Armlehnen erstreckt. Das Tischteil
ist längs der Armlehnen bzw. der von diesen gebildeten
Auflagebereiche verschiebbar, so daß es in Abhängigkeit
von Alter und Größe des Kindes in unterschiedliche Stellungen gebracht werden kann. In der DE-OS 29 23 126 ist
ein derartiger Kinder-Sicherheitssitz beschrieben, der
mit einem textilen oder textilartigen Überzug versehen ist,
und bei dem im Bereich der Oberränder der Armlehnen ein
kletthaftfähiger Bereich und entsprechend an der Unterseite des Tischteils Klettbandstreifen vorgesehen sind,
welche es ermöglichen, das Tischteil der Größe des Kindes
angepaßt an unterschiedlichen Stellen zu arretieren. Die
Ober- und Unterseite des Tischteils sind durchgehend
eben ausgebildet.

Die   eigentliche Halterung des Kindes und des Sicherheitssitzes im Kraftfahrzeug erfolgt mittels des im Fahrzeug vorhandenen Gurtsystems, wobei der Beckengurt
das Beckengurtteil hinter dem Tischteil durchläuft und das
Kind in Körperkontakt mit den Gurtbändern steht oder stehen soll. Das Tischteil , das in den Augen der Benutzer
als Spieltisch wirkt und keine augenfällige Schutzfunktion
ausübt, wird unter Umständen nicht richtig aufgebracht
oder auch weggelassen. Auch der Beckengurtteil ,  der
eng am Körper des Kindes anliegen sollte, ist vielfach zu
locker angelegt, um dem Kind eine ausreichende Bewegungsfreiheit zu ermöglichen und es komfortabel  zu haltern.
Dies hat jedoch den Nachteil, daß der Sicherheitssitz
und das Gurtsystem im Falle eines Unfalls, insbesondere
bei Überschlägen seine Funktion nicht immer ausreichend
sicher erfüllen kann, so daß es u.U. zu einem Herausfallen des Kindes kommen kann oder zu Verletzungen insbesondere der
Weichteile. Auch ein als "Submarining" bzw. Tauchen bezeichneter Effekt,bei dem das Kind unter dem Beckengurt
durchrutscht, was zu Verletzungen im Hals-und Gesichtsbereich führen kann, ist hierdurch nicht ausgeschlossen.
Dies gilt um so mehr, wenn der Kinder-Sicherheitssitz
dazu dienen soll, Kinder unterschiedlicher Größe aufzunehmen, da in diesen Fällen Kompromisse bezüglich der
Gurtführung gefunden werden müssen, die nicht für alle
Körpergrößen den optimalen Schutz gewährleisten. Hierbei
ist insbesondere zu beachten, daß nicht nur unterschiedlich große, sondern auch unterschiedlich starke Kinder
von dem selben Sitz geschützt werden sollen.   Das
vorstehend erwähnte in unterschiedlichen Lagen arretierbare Tischteil liefert somit für diese Fälle alleine keine befriedigende Abhilfe .

Der vorliegenden Erfindung liegt daher die Aufgabe zugrunde, einen für Kinder der Altersgruppen I und II gemäß ECE-Norm geeigneten Kinder-Sicherheitssitz zu schaffen, der den Submarining-Effekt wirksam vermeidet und einen sicheren Schutz, insbesondere der Weichteile des Kindes liefert.

Diese Aufgabe wird erfindungsgemäß durch Konstruktionen gelöst, wie sie in den nebengeordneten Hauptansprüchen 1, 4 und 8 beschrieben sind. Bevorzugte Weiterbildungen sind in den untergeordneten Ansprüchen beschrieben.

Mit der Erfindung in ihrer ersten Ausgestaltung wird ein Kinder-Sicherheitssitz mit nach vorne weisenden Seitenwänden geschaffen, die als Armlehnen ausgebildet sind oder in solchen münden. Nach oben gerichtete Flächen der Armlehnen legen Auflagebereiche für ein abnehmbares prallkissenartig ausgebildetes Tischteil fest, das sich zwischen den Armlehnen erstreckt. Ferner sind Mittel zur Halterung des Tischteils an verschiedenen Stellen längs der Armlehnen vorgesehen, sowie Mittel zur Befestigung des Sicherheitssitzes auf dem Sitz eines Fahrzeuges unter Verwendung des an diesem vorhandenen Sicherheitsgurtsystems. Der Sicherheitssitz ist dadurch gekennzeichnet, daß die Auflagebereiche an den Armlehnen und/oder die mit diesen in Eingriff tretenden Bereiche des Tischteils derart geformt sind, daß der minimale lichte Abstand zwischen der Unterseite des Tischteils und der die Beine bzw. das Gesäß des Kindes aufnehmenden Sitzfläche zwischen den Armlehnen kontinuierlich zunimmt, je weiter nach vorne verschoben die Lage ist, die das Tischteil ausgehend von seiner rückwärtigen Endlage relativ zu den Armlehnen einnimmt und/oder daß das Tischteil an seinem zwischen den Armlehnen herabgezogenen Bereich zumindest ein entfernbares Abstandselement enthält, das durch seine Herausnahme eine Änderung des lichten Abstands und damit eine An-

passung an unterschiedliche Körpergrößen des Kindes bewirkt. Der minimale lichte Abstand zwischen dem Tischteil und der Sitzfläche tritt im Regelfalle im rückwärtigen Bereich des Tischteiles auf, wobei dieser am kleinsten ist, wenn das Tischteil, dem kleinsten aufzunehmenden Kinde entsprechend, seine rückwärtige Endlage einnimmt, in der es vorzugsweise auch an einer Begrenzung anliegt. Die Sitzfläche kann hierbei die Oberseite einer einheitlich mit dem Kinde-Sicherheitssitz ausgebildeten Sitzschale sein oder auch die Oberfläche des Kraftfahrzeugsitzes selbst, wenn der Sicherheitssitz lediglich als auf der Vorderseite offener Rahmen ausgebildet ist, in welchem das Kind sitzt.

Durch die erfindungsgemäße Ausgestaltung des Kinder-Sicherheitssitzes wird erreicht, daß auch ein kleines Kind nicht unter dem Tischteil durchtauchen kann, daß umgekehrt jedoch auch größere Kinder, wenn das Tischteil entsprechend dem zunehmenden Alter weiter nach vorne gerückt ist, oder entsprechende Abstandselemente herausgenommen sind, sicher gehaltert werden und zwar auch dann, wenn der Sicherheitsitz nur mit einem Zweipunkt-bzw. Beckengurt befestigt ist.
Gemäß einer bevorzugten Weiterbildung ist das Tischteil als quaderförmiges eigensteifes Polster ausgebildet, das eine von dessen Vorderseite ausgehende und über die gesamte Breite desselben verlaufende Aussparung enthält, zur vorzugsweisen losen Aufnahme eines Gurtbandstückes, welches den Beckengurtteil eines Sicherheitsgurtes des Fahrzeugs bildet oder mit diesem verbindbar ist. Durch diese Ausgestaltung entsteht ein besonders wirksamer Schutz der Weichteile des Kindes, da das Beckengurtteil in diesem Falle keinen Körperkontakt mit dem Kind hat und ausschließlich dazu dient, den Sitz und das als Prallkörper wirkende Tischteil in geeigneter Weise zu haltern.

Mit der Erfindung gemäß einer zweiten grundsätzlichen Ausgestaltung wird ein Kinder-Sicherheitssitz mit nach vorne weisenden Seitenwänden, die als Armlehnen ausgebildet sind oder in solche münden, geschaffen, wobei nach oben gerichtete Flächen der Armlehnen Auflagebereiche für ein abnehmbares prallkissenartig ausgebildetes Tischteil festlegen, das sich zwischen den Armlehnen erstreckt, wobei Mittel zur Halterung des Tischteils an verschiedenen Stellen längs der Armlehnen und Mittel zur Befestigung des Sicherheitssitzes auf dem Sitz eines Fahrzeugs unter Verwendung des an diesem vorhandenen Sicherheitsgurtsystems vorgesehen sind. Diese Ausgestaltung des Kindersicherheitssitzes ist dadurch gekennzeichnet, daß das Tischteil als quaderförmiges eigensteifes Polster ausgebildet ist, das eine von dessen Vorderseite ausgehende und über die gesamte Breite desselben verlaufende Aussparung enthält, zur vorzugsweisen losen Aufnahme eines Gurtbandstückes, welches den Beckengurt eines Sicherheitsgurtes des Fahrzeugs bildet oder mit diesem verbindbar ist. Die Vorteile dieser Ausgestaltung sind vorstehend bereits anhand einer entsprechenden Weiterbildung des ersten Ausführungsbeispiels beschrieben.

Bei dieser zweiten Ausgestaltung der Erfindung wird zweckmäßigerweise in analoger Weise wie bei der ersten Ausgestaltung der Auflagebereich an den Armlehnen oder der mit diesen in Eingriff tretende Bereich des Tischteils derart geformt, daß der minimale lichte Abstand zwischen der Unterseite des Tischteils und der die Beine bzw. das Gesäß des Kindes aufnehmenden Sitzfläche im Bereich zwischen den Armlehnen kontinuierlich zunimmt, je weiter nach vorne verschoben die Lage ist, die das Tischteil ausgehend von seiner rückwärtigen Endlage relativ zu den Armlehnen einnimmt, wobei zusätzlich oder als Alternative das Tischteil an einem zwischen den Armlehnen herabgezogenen Bereich zumindest ein einlegbares Abstandselement enthält.

Bei den vorstehend beschriebenen Ausgestaltungen des Kinder-Sicherheitssitzes und im Falle einer Ausbildung derselben mit Kopf- und Rückenstütze, hat es sich als besonders zweckmäßig erwiesen, wenn an dem vorderen Randbereich zumindest einer der an beiden Seiten der Rückenstütze vorstehenden Seitenwände eine Führung zur losen Aufnahme eines Schultergurtbandes von einem Sicherheitsgurt des Fahrzeugs vorgesehen oder anbringbar ist. Insbesondere dann, wenn diese Führung höhenverstellbar ausgebildet ist, d.h. längs der Seitenwände bzw. deren vorderer Ränder möglichst kontinuierlich verschoben werden kann, ergibt sich eine zusätzliche Sicherung für den Schulterbereich des Kindes, welche eine Anpassung an unterschiedliche Schulterhöhen ermöglicht. Eine höhenverstellbare Gurtführung für ein Schulterbandstück ist aus dem Patent 29 23 125 der Anmelderin bekannt.

Gemäß einer dritten Ausgestaltung der Erfindung wird ein Kinder-Sicherheitssitz mit einer Kopf- und einer Rückenstütze sowie mit nach vorne weisenden Seitenwänden, die als Armlehnen ausgebildet sind oder in solchen münden, geschaffen, bei dem nach oben gerichtete Flächen der Armlehnen Auflagebereiche für ein abnehmbares prallkissenartig ausgebildetes Tischteil festlegen, das sich zwischen den Armlehnen erstreckt und bei dem das Tischteil längs der Armlehne verschiebbar ist und Mittel zur Befestigung des Sicherheitssitzes auf dem Sitz eines Fahrzeugs unter Verwendung des an diesem vorhandenen Sicherheitsgurtsystems vorgesehen sind. Dieser Sicherheitssitz ist dadurch gekennzeichnet, daß das Tischteil als quaderförmiges eigensteifes Polster ausgebildet ist, das eine von dessen Vorderseite ausgehende und über die gesamte Breite desselben verlaufende Aussparung enthält, zur Aufnahme eines Gurtbandstückes, welches den Beckengurtteil eines Sicherheitsgurtes des Fahrzeugs bildet oder mit diesem verbindbar ist, und daß an dem vorderen Randbereich zumindest einer der an beiden Seiten der Rückenstütze vorstehenden Seitenwände eine höhenverstellbare Führung zur losen Aufnahme eines Schultergurtteiles von einem Sicherheitsgurt des Fahrzeugs vorgesehen oder anbringbar ist.

Bei dieser Ausgestaltung der Erfindung ist eine Arretierung des Tischteils längs der der Armlehnen nicht unbedingt notwendig und sie kann insbesondere dann entfallen, wenn der Sicherheitssitz zusammen mit einem Dreipunktautomatikgurt verwendet wird, da das Kind dann einen gewissen Bewegungsspielraum hat und die Gurtaufwickeltrommel das Kissen jeweils in lose Anlage an den Körper zurückbringt. Alternativ hierzu können jedoch auch bei dieser Ausführungsform Mittel vorgesehen sein, welche das Tischteil an unterschiedlichen Stellen längs der Armlehne arretieren lassen.

Besonders zweckmäßig ist es bei dieser Ausgestaltung der Erfindung, wenn die Führung für das Schultergurtteil kontinuierlich verstellbar ist. Wenn der Sicherheitssitz eine Führung zur losen Aufnahme des Schultergurtbandes enthält, kann mit Vorteil eine Ausführung verwendet werden, bei der die Führung von einer zu öffnenden Schlaufe gebildet ist. Die Führung kann zweckmäßigerweise auf einem Streifen aus textilen oder sonst biegbaren Material angebracht sein, wobei der Streifen mittels eines Klettbands an beliebigen Stellen des vorderen Randbereichs der Seitenwände lösbar befestigbar ist. Da die auf die Führung wirkenden Kräfte gering sind, ist es nicht notwendig, auf den Seitenwänden ebenfalls ein Klettband anzubringen, sondern es genügt in der Regel, wenn diese aus einem textilen Material bestehen. Einen besonders guten Halt erhält man, wenn die Streifen fingerartige seitliche Fortsätze enthalten, die um die Seitenwandung herumlegbar sind, wobei die Fortsätze auf ihrer Unterseite ein Klettband tragen oder bilden. Diese Ausgestaltung ermöglicht es, daß die Führung unabhängig von der jeweils eingenommenen Lage einen guten Sitz aufweist, auch dann, wenn die Seitenwände gekrümmt verlaufen.

Als besonders günstig hat es sich erwiesen, wenn die Schlaufe von dem Streifen und einem auf dessen Oberfläche d.h. über oder unter diesem lösbar befestigten Streifenteil gebildet ist. Die Befestigung kann beispielsweise mittels Druckknöpfen erfolgen, die an beiden Enden oder an einem Ende des Streifens und Streifenteiles angebracht sind oder mittels eines Knebels bzw. einer Niet, der auf dem Streifen bzw. dem Streifenteil befestigt ist und durch eine Öse auf dem Streifenteil bzw. Streifen durchsteckbar ist.

Eine noch bessere Anpassung an Kinder unterschiedlichen Alters bzw. unterschiedlicher Größe läßt sich dadurch erreichen, wenn der vordere Rand zumindest derjenigen der beiden Seitenwände, an dem die Führung vorgesehen oder anbringbar ist, in dem Verstellbereich der Führung in Richtung auf das obere Ende des Sitzes bezüglich der Rückenstütze nach vorne geneigt verläuft. Die Führung kommt daher bei größeren Kindern weiter nach vorne zu liegen, bei denen auch der Schulterbereich bereits stärker ausgebildet ist.

Auch bei der dritten Ausgestaltung der Erfindung läßt sich die Sicherheit weiter verbessern, indem man die Auflagebereiche an den Armlehnen und/oder die mit diesen in Eingriff tretenden Bereiche des Tischteils derart formt, daß der minimale lichte Abstand zwischen der Unterseite des Tischteils und der die Beine bzw. das Gesäß des Kindes aufnehmenden Sitzfläche zwischen den Armlehnen kontinuierlich zunimmt, je weiter nach vorne verschoben die Lage ist, die das Tischteil, ausgehend von seiner rückwärtigen Endlage, relativ zu den Armlehnen einnimmt und/oder wenn das Tischteil an seinem zwischen den Armlehnen herabgezogenen Bereich zumindest ein entfernbares Abstandselement erhält.

Im folgenden werden Weiterbildungen des Kindersicherheitssitzes erläutert, die bei den verschiedenen Ausgestaltungen der Erfindung mit Vorteil anwendbar sind. Hierzu gehört die Ausgestaltung der Aussparung in dem Tischteil, die vorzugsweise eine nach vorne gewölbte und zumindest unten abgerundete, zweckmäßigerweise glatte rückwärtige Begrenzungsfläche aufweist, an der das Gurtband anliegt, wobei die Aussparung des weiteren mit Vorteil im Randbereich nach unten gewölbt verläuft und an beiden Rändern bis in die Nähe der Rückseite heranreicht. Durch diese Gestaltung der Aussparung läßt sich ein einfaches Einführen des Beckengurtbandes bewerkstelligen, bei gleichzeitiger Beibehaltung einer ebenen ununterbrochenen Oberfläche des Tischteils. Gleichzeitig wird bewirkt, daß das Beckengurtband das Tischteil jeweils in einer stabilen Lage hält, aus der es auch bei Überschlägen des Fahrzeugs nicht herausgerät.

Die Unterseite des Tischteils enthält zweckmäßigerweise in der Mitte eine Ausbuchtung, die in dem Bereich zwischen den Beinen des Kindes liegt und diesen anatomisch angepaßt ist, während die Rückseite des Tischteils einem kreisbogenförmig oder ovalen Ausschnitt trägt, um auch hier bei einem Aufprall des Kindes eine möglichst optimale anatomische Anpassung zu bewerkstelligen.

Der Sicherheitssitz enthält bevorzugt auch einen schalenförmigen mittig mit einer Erhebung versehenen und am vorderen Rand nach unten abgebogenen Bodenbereich, der dazu beiträgt, daß das Kind während der Fahrt nicht verrutscht.

Als Mittel zur Arretierung des Tischteils an den Armlehnen dienen mit Vorteil kletthaftfähige Bereiche und Klettbandstreifen, die im Bereich der miteinander in Eingriff bringbaren Stellen der Unterseite des Tischteils und der Armlehnen angebracht sind. Der haftungsvermittelnde kletthaftfähige Bereiche oder der Klettbandstreifen der Armlehnen können auf diesen lösbar befestigt sein, so daß sie den jeweiligen Bedürfnissen entsprechend versetzt werden können. Hierzu sind zweckmäßigerweise den oberen Rand der Armlehnen umfassende Pratzen vorgesehen, die seitlich an einer textilen Umhüllung des Sitzes arretierbar sind.

Die gewünschte Änderung in dem lichten Abstand zwischen der Unterseite des Tischteils und der Sitzfläche wird gemäß einer ersten Ausführungsform dadurch erreicht, daß man die Oberseite der Armlehnen und die damit in Berührung bringbaren Flächen des Tischteiles als gerade bzw. ebene Anlageflächen bilden, die eine zur Vorderseite des Sitzes hin ansteigende Führung festlegen, welche gegenüber der Grundfläche des Sitzes und/oder der Tischoberfläche geneigt verläuft. Bei einem Nachvorneverschieben des Tischteils auf den Armlehnen wird das Tischteil durch die keilförmig ausgebildeten Verschiebeflächen angehoben, so daß auch dickere bzw. stärkere Oberschenkel des größeren Kindes bequem aufgenommen werden können.

Ein Vergrößern des lichten Abstands beim Nachvorneverschieben des Tischteils kann gemäß einer zweiten besonders vorteilhaften Ausführungsform dadurch erreicht werden, daß man die Oberseiten der Armlehnen und die damit in Berührung bringbaren Flächen des Tischteils als Nocken- und Nockenfolgerflächen ausbildet. Im Zusammenhang mit dieser Maßnahme kann es günstig sein, zwischen den Armlehnen und den Seitenwänden Aussparungen vorzusehen. Mit Vorteil verjüngen sich diese konisch nach unten, wobei sie an ihrem Bodenbereich eine Breite aufweisen, welche der Breite der zur Halterung des Sicherheitssitzes verwendeten Gurtbänder entspricht, wobei
die Rückseite dieser Ausnehmung das untere Ende der
Vorderkante von dem die Rückenlehne begrenzenden Seitenflächen sein kann. Das Entstehen von Weichteilverletzungen durch die Gurtbänder sowie des Submarinings wird
weiter verringert, wenn man im Bodenbereich der Ausnehmungen nach rückwärts ansteigend ausbildet und zwar
dergestalt, daß er gegenüber der Horizontalen, d.h. der
durch die Grundläche des Kinder-Sicherheitssitzes festgelegten Ebene einen Winkel von etwa 10 bis etwa 25°,
vorzugsweise etwa 15° einschließt. Die Vorderwandung der
Ausnehmung, welche von der Rückseite der Armlehne gebildet wird, verläuft mit Vorteil etwa senkrecht zum
Bodenbereich und schließt mit diesem einen Winkel von
etwa 90 bis 95° ein, wobei sich ein Wert von etwa 93,5° als
am günstigsten erwiesen hat. Mit der die Ausnehmung
hinten begrenzenden Wandung, welche wie erwähnt von dem
unteren Ende der Vorderkante der Seitenwände gebildet
wird, schließt der Bodenbereich zweckmäßigerweise einen
stumpfen Winkel ein, der in einem Bereich zwischen etwa
105 und 125° liegt, mit Vorzug bei etwa 113°.

Bei der Ausgestaltung der Anlageflächen von Tischteil
und Armlehnen hat sich eine Ausführung besonders bewährt, bei der die Oberseite der Armlehnen im vorderen
Bereich geradlinig, d.h. parallel zur Basisfläche des
Kindersitzes verläuft und im Bereich ihres rückwärtigen
Endes angrenzend zu der Ausnehmung, eine Erhebung enthält, wobei die damit in Eingriff bringbaren Führungsflächen an der Unterseite des Tischteils im Mittelbereich
eingezogen sind, so daß sie eine in Seitenansicht abgeflachte S-förmige Kontur erhalten, und wobei die Führungsflächen am rückwärtigen Ende des Tischteils am weitesten
nach unten herabreichen. Gemäß einer Variante zu dieser
Ausführungsform verläuft die Oberseite der Armebene geradlinig, vorzugsweise parallel zur Unterseite des Kinder-Sicherheitssitzes, wobei in diesem Falle die damit in Eingriff bringbaren Führungsflächen an der Unterseite des Tischteils im Mittelbereich eingezogen sind und am rückwärtigen Endbereich am weitesten herabreichen. Die auf diese Weise erzeugte S-förmig gewellte Struktur der Führungsflächen an der Unterseite des Tischteils verläuft jedoch hier stärker gewellt als bei dem vorstehend erwähnten Fall, bei dem die Oberseiten der Armlehnen im rückwärtigen Bereich die Erhebung aufweisen. Die Führungsflächen an der Unterseite des Tischteiles verlaufen günstigerweise als halbmondförmige Abwicklung.

Gemäß einer zweckmäßigen Ausgestaltung der Führungsflächen an der Unterseite des Tischteils weisen diese einen an die Vorderseite desselben angrenzenden ersten konvex-gekrümmten Bereich auf, an den sich ein im Mittelbereich des Tischteils belegener konkav-gekrümmter Bereich anschließt und in diesen ein zweiter konvex-gekrümmter Bereich,der am rückwärtigen Endes des Tischteiles belegen ist und dessen Scheitel den tiefsten Punkt der Führungsfläche bildet und in die ebene Rückwand des Tischteils übergeht. Der erste konvex-gekrümmte Bereich und der daran anschließende konkav-gekrümmte Bereich haben in der Regel große Krümmungsradien während der zweite konvex-gekrümmte Bereich den kleinsten Krümmungsradius aufweist.

Bezüglich der Ausgestaltung der an der Unterseite des Tischteils entfernbar gehalterten Abstandselemente hat es sich als besonders zweckmäßigerwiesen, wenn das Tischteil eine Umhüllung aus textilem oder Kunststoffmaterial enthält, die abnehmbar ist und das an der Unterseite des Tischteils anbringbare, zumindest eine Abstandelement zu einer Einheit umschließt. Das Tischteil weist zur Aufnahme der Abstandselemente an seinem zwischen den Armlehnen herabgezogenen Bereich zweckmäßigerweise Schlitze auf, die vorzugsweise von der Vorderseite, unter Umständen jedoch auch von der Rückseite ausgehen und in welche die tafelförmig gestalteten Abstandselemente einschiebbar sind. Die Abstandselemente sind mit Vorteil miteinander und/oder mit dem Körper des bevorzugt aus Hartschaum gebildeten Tischteils verriegelbar, beispielsweise mittels Noppen und kongruenter Ausnehmungen.

Die beiliegenden schematischen Zeichnungen bevorzugter Ausführungsbeispiele dienen der weiteren Erläuterung der Erfindung.

Fig. 1 zeigt in Seitenansicht eine erste Ausführungsform eines Kinder-Sicherheitssitzes, bei der das Tischteil die maximal zurückgeschobene Lage einnimmt, wie sie bei der Halterung der kleinsten von dem Sicherheits aufzunehmenden Kindern vorgesehen ist.

Fig. 2 zeigt eine Darstellung ähnlich zu derjenigen von Fig. 1, bei der jedoch das Tischteil eine mittlere Lage einnimmt, wie sie bei der Aufnahme von etwas größeren Kindern zur Anwendung kommt.

Fig. 3 zeigt eine den Fig. 1 und 2 entsprechende Darstellung des Kinder-Sicherheitssitzes, bei der jedoch das Tischteil in etwa die maximal nach vorne geschobene Lage einnimmt, wie sie bei der Halterung der größten von dem Sicherheitssitz aufzunehmenden Kinder zur Anwendung kommt.

Fig. 4 zeigt eine Vorderansicht des in Fig. 1 bis 3 dargestellten Kinder-Sicherheitssitzes und die Halterung desselben mittels eines Dreipunkt-Sicherheitsgurtes, wobei der Schulterschräggurt hinter der Rückenlehne des Sicherheitssitzes verläuft, was besonders bei der Aufnahme von Kleinkindern vorteilhaft ist, da diese mit dem Gurtband auch im Falle eines Unfalls nicht in Körperkontakt geraten.

Fig. 5 zeigt eine Draufsicht auf den Kinder-Sicherheitssitz von Fig. 4 gemäß dem dort dargestellten Pfeil V, jedoch ohne das Gurtsystem.

Fig. 6 zeigt eine perspektivische Vorderansicht des in den Fig. 1 bis 3 dargestellten Kinder-Sicherheitssitzes und dessen Verwendung bei einem Zweipunkt-Sicherheitsgurtsystem wobei das Tischteil bis nahe an seine rückwärtige Endlage zurückgeschoben ist.

Fig. 7 zeigt eine Darstellung entsprechend derjenigen von Fig. 6, bei der jedoch der Kinder-Sicherheitssitz mittels eines Dreipunkt-Sicherheitsgurtsystems gehalten ist, wobei das Schulterschrägband vor dem Sicherheitssitz verläuft und eine verschiebbare Gurtführung durchsetzt, die an dem vorderen Rand von einer Seitenwandung des Sicherheitssitzes angebracht ist und wobei das Tischteil seine maximal nach vorne verschobene Lage einnimmt zur Aufnahme von größeren Kindern.

Fig. 8 bis 10 zeigen Seitenansichten entsprechend zu denjenigen von Fig. 1 bis 3 von einer Variante des Kinder-Sicherheitssitzes, bei der die Oberkante der Armlehnen und die mit dieser in Wirkverbindung tretenden Führungsflächen an der Unterseite des Tischteils als Nocken- bzw. Nockenfolgerflächen ausgebildet sind.

Fig. 11 bis 13 zeigen Seitenansichten entsprechend denjenigen der Fig. 1 bis 3 von einer weiteren Variante des Kinder-Sicherheitssitzes, bei der die Oberkanten der Armlehnen und die mit diesen in Eingriff tretenden Führungsflächen an der Unterseite des Tischteils geradlinig ausgebildet sind, so daß bei einer Verschiebung des Tischteiles längs den Armlehnen dieses keilförmig angehoben wird.

Fig. 14 zeigt eine Vorderansicht von einer Variante des Tischteiles, bei der in dem zwischen den Armlehnen gelegenen nach unten ragenden Bereich Abstandsstücke einschiebbar sind.

Fig. 15 zeigt eine Detailansicht im vergrößerten Maßstab
von der in Fig. 7 dargestellten Schultergurtführung.

Fig. 16 zeigt in detaillierter Darstellung die zwischen
den rückwärtigen Enden der Armlehnen und den Vorderseiten der Seitenflächen gelegenen Ausnehmungen.

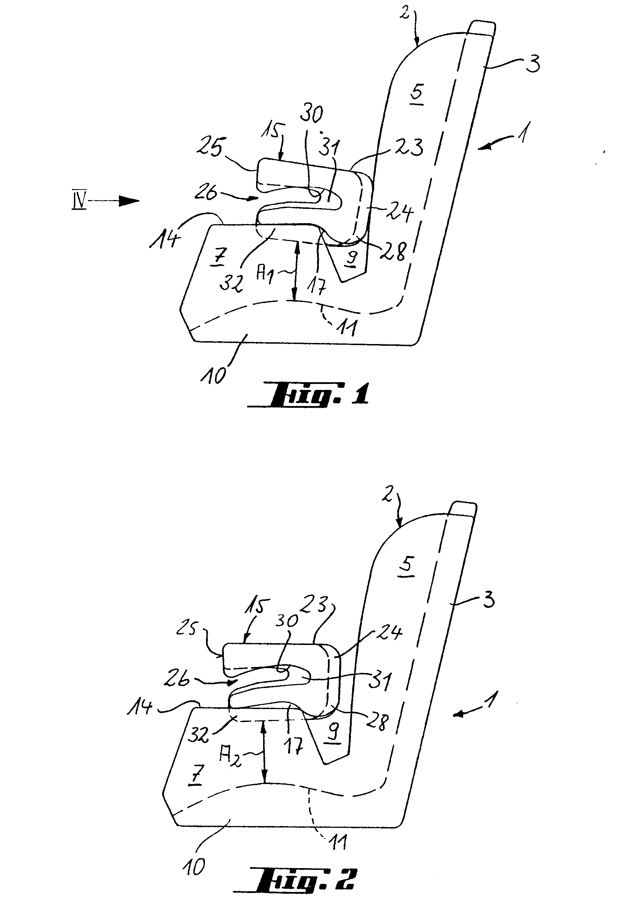

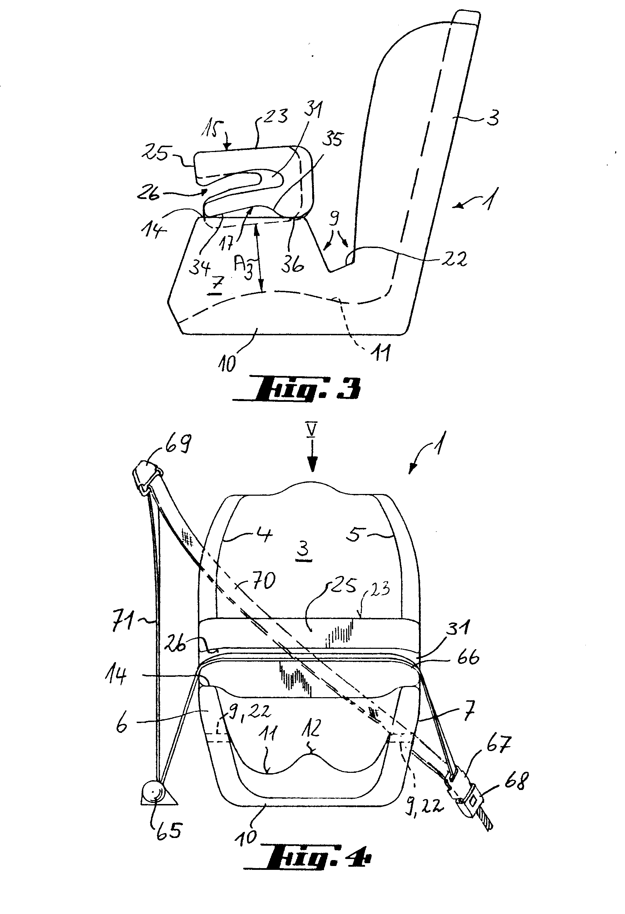

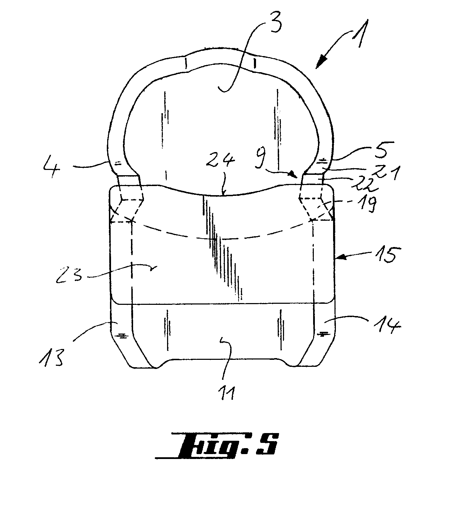

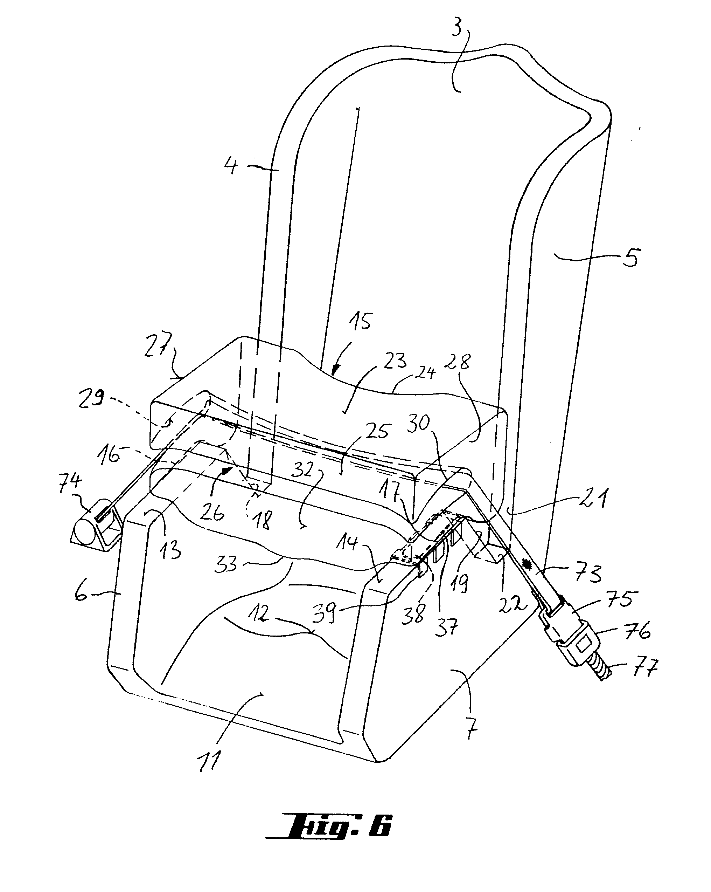

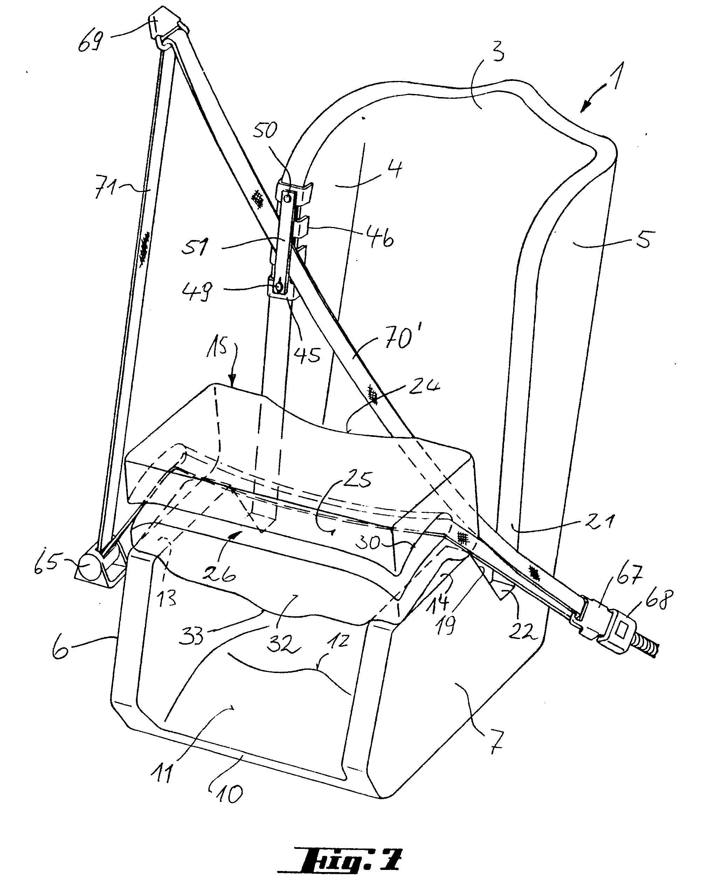

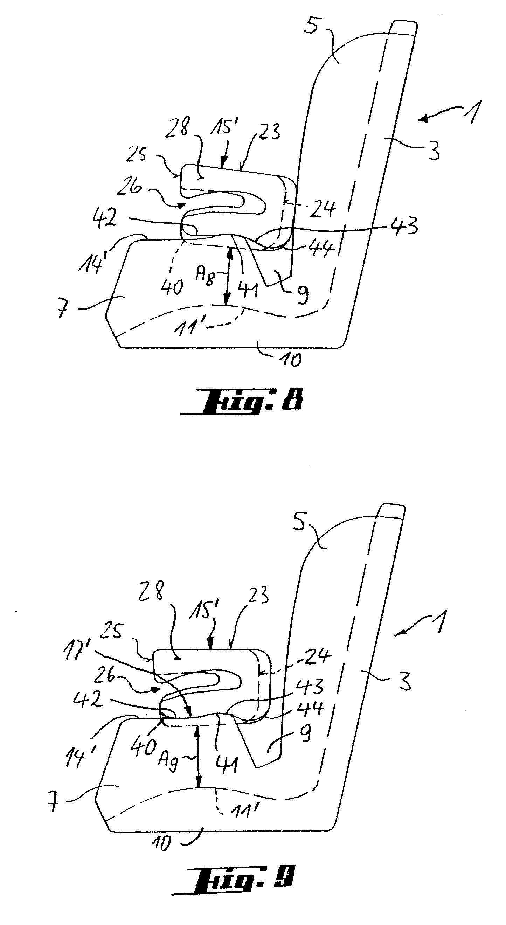

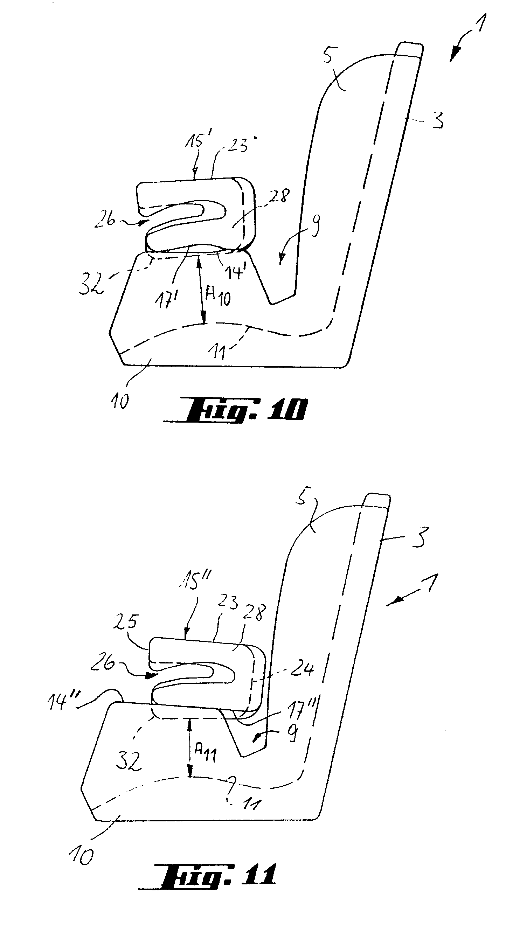

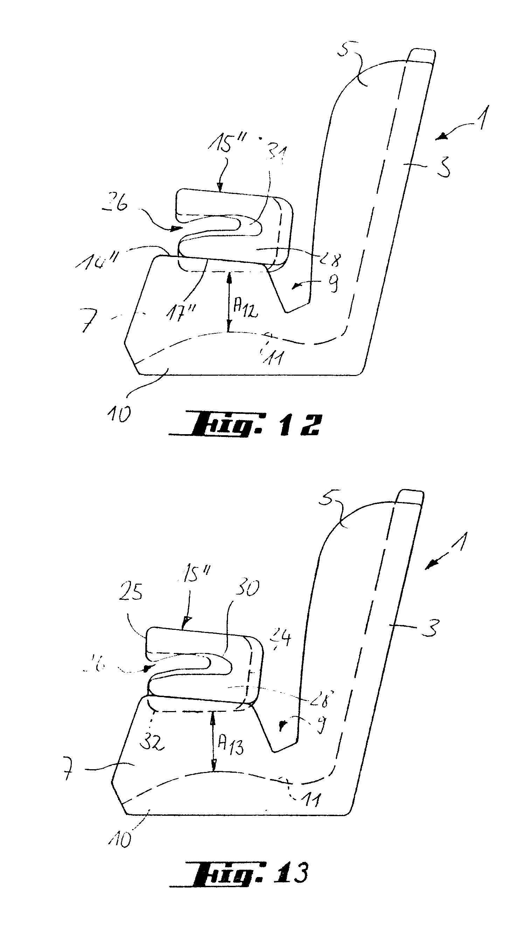

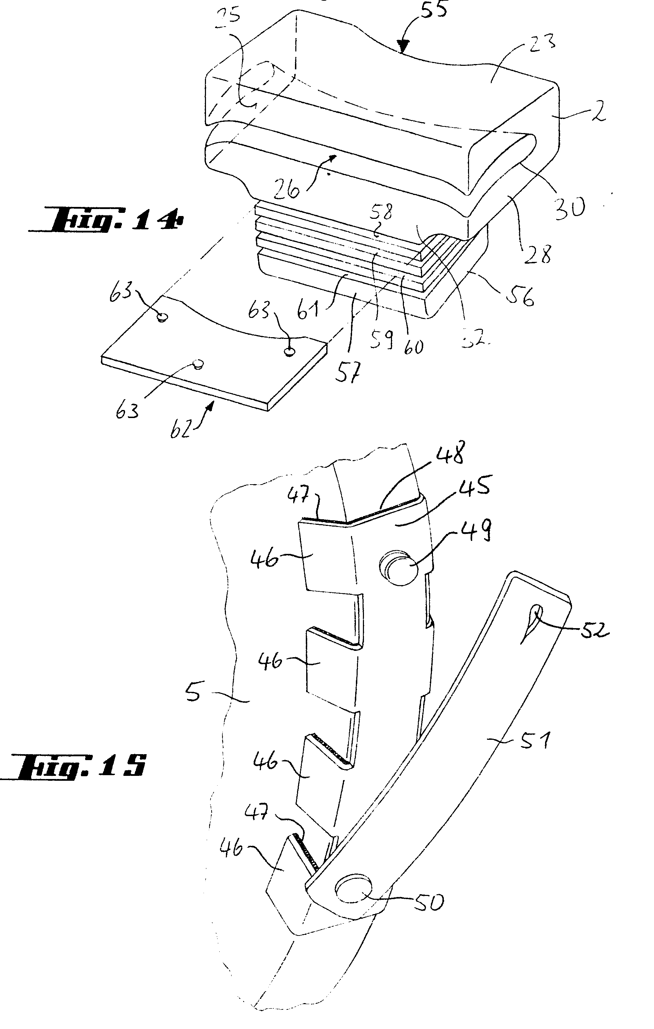

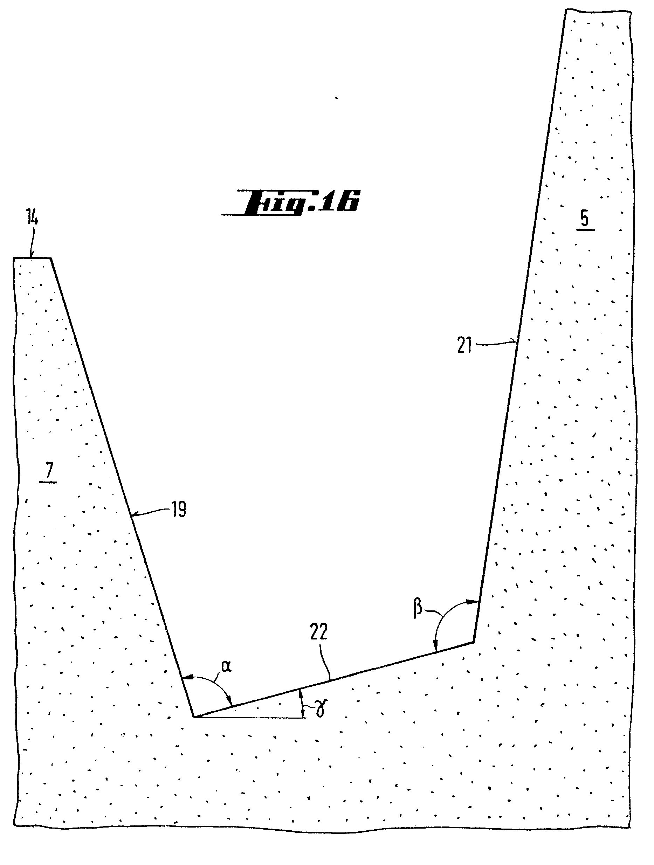

Die Fig. 1 bis 5 zeigen ein Ausführungsbeispiel eines
Kinder-Sicherheitssitzes 1. Er besteht aus einer Sitzschale 2, die in einem STück aus Hartschaum ausgebildet
ist, die eine Kopf- und Rückenstützte 3 enthält, sowie
von dieser nach vorne abstehende Seitenwände 4 und 5, die
im unteren Bereich in Armlehnen 6, 7 übergehen und von
diesen mittels V-artiger Ausnehmungen 8 und 9 getrennt
sind. Ein Bodenbereich 10 verbindet die unteren Enden
der Seitenwände 4 und 5 und der Armlehnen 6, 7 und legt
mit seiner Oberseite eine Sitzfläche 11 fest, welche in
ihrer Mitte eine Erhebung 12 aufweist und am vorderen
Rand nach unten abgebogen ist. Die Oberkanten der Armlehnen 6 und 7 bilden horizontal verlaufende ebene Auflageflächen 13, 14 auf denen sich ein Tischteil 15 über
Auflageflächen 16, 17 abstützt, die an dessen Unterseite
angrenzend an die seitlichen Außenränder angebracht
sind. Die Ausnehmungen 8 und 9, deren Verlauf im einzelnen aus der teilgebrochenen Detailansicht von Fig. 16
ersichtlich ist, verjüngen sich konisch nach unten, wobei die Vorderseiten von den Rückwandungen 18, 19 der
Armlehnen 6, 7 gebildet sind und die Rückseiten durch
die unteren Enden 20, 21 der Vorderkanten der Seitenwände 4 und 5. Dazwischen erstreckt sich ein geradliniger Bodenbereich 22, der eine Breite aufweist, welche
der Breite der zur Halterung des Kinder-Sicherheitssitzes
verwendeten Gurtbänder entspricht und im Falle einer Verwendung normaler KFZ-Sicherheitsgurte

etwa 6 bis 7 cm beträgt. Der Bodenbereich steigt nach rückwärts leicht an und schließt mit der durch die Grundfläche des Kindersitzes festgelegten Ebene einen Winkel $\gamma$ von 10 bis 25°, vorzugsweise ca. 15° gemäß der bevorzugten Ausführungsform von 15,5° ein. Der Winkel, den die Rückseite 19 der Armlehne mit dem Bodenbereich 22 einschließt, und der in Fig. 16 mit $\alpha$ gekennzeichnet ist, ist ein nahezu rechter Winkel und beträgt vorzugsweise 90 bis 95°, vorzugsweise 93,5 °. Der zwischen dem Bodenbereich 22 und dem unteren Ende 21 der Vorderkante der Seitenwandung 4 bzw. 5 eingeschlossene Winkel ß ist ein stumpfer Winkel, der vorzugsweise zwischen 105 und 125° beträgt gemäß dem bevorzugten Ausführungsbeispiel 113°.

Die Vorderkanten der Seitenwände 4 und 5 haben einen derartigen Verlauf, daß mit zunehmenden Abstand derselben über der Sitzfläche 11 der Abstand von der Vorderseite der Rückenstütze zunimmt, wobei das obere Ende abgerundet verläuft.

Im folgenden wird näher auf das Tischteil 15 eingegangen. Es besteht aus einem quaderförmigen eigensteifen Polster, das auf seiner Oberseite einen ebenen Spieltisch 23 festlegt. An der Rückseite, d.h. an der der Rückenstütze 3 zugekehrten Seite befindet sich eine etwa parallel zu der Rückenstütze verlaufende Prallfläche 24, die im Mittelbereich, d.h. zwischen den Armlehnen 6 und 7 eine kreisbogenförmige Einbuchtung trägt. Sämtliche Kanten des Tischteils 15 sind abgerundet. Von der Vorderseite 25 des Tischteils 15 erstreckt sich über die gesamte Breite desselben eine Aussparung 26, die etwa parallel zum Spieltisch 23 bis weit in dessen Mitte hineinreicht und in den beiden Seitenflächen 27, 28 des Tischteils 15 miteinander in Verbindung stehende Öffnungen 29, 30 festlegt, die bis in die Nähe der Rückseite des Tischteils zurückreichen. Die Öffnungen 29 und 30 verlaufen leicht nach oben gekrümmt und am rückwärtigen Ende abgerundet, wobei die Aussparung im Inneren des Tischteils 15 einen entsprechenden Verlauf aufweist und in einer rückwärtigen Begrenzungsfläche endet, die in der Mitte nach vorne gewölbt sowie oben und unten abgerundet ist. Die Ausnehmung verläuft, wie man am besten aus der Darstellung der Figuren 4 und 6 ersieht, im Randbereich nach unten gewölbt.

Zwischen den Führungsflächen 16 und 17 enthält das Tischteil einen nach unten gezogenen Bereich 32, der zwischen die Armlehnen 6 und 7 hinabreicht und in der Mitte eine Ausbuchtung 33 aufweist, die im Zusammenwirken mit der Erhebung 12 auf der Sitzfläche 11 dafür sorgt, daß die Oberschenkel des von dem Sicherheitssitz 1 aufzunehmenden Kindes ordnungsgemäß geführt sind, so daß der Körper des Kindes im Falle eines Unfalls nicht unten durchrutschen kann.

Durch den aus den Fig. 1 bis 4 ersichtlichen Verlauf der Auflageflächen 16 und 17 wird erreicht, daß der durch A bezeichnete lichte Abstand zwischen der Unterseite des Tischteils 15 und der Sitzfläche 11 zunehmend größer wird, je weiter nach vorne das Tischteil 15 gegenüber den Armlehnen 6 und 7 verschoben ist. Der minimale freie Abstand A1 wird bei der in Fig. 1 gezeigten rückwärtigen Endlage erreicht. Wenn das Tischteil 15, wie in Fig. 2 gezeigt, weiter nach vorne verschoben ist, vergrößert sich damit auch der lichte Abstand, wobei der mit A2 angedeutete Wert eingenommen wird. Ist das Tischteil 15 schließlich in seine vordere Endlage gebracht, so vergrößert sich der lichte Abstand nochmals bis der in Fig. 3 gezeigte Endwert A3 eingenommen ist. Gleichzeitig mit der Vergrößerung des lichten Abstands verschiebt sich auch diejenige Stelle, an der dieser eingenommen wird in Richtung auf die Vorderkante des Sicherheitssitzes, so daß für die Schenkel und den Bauchbereich des Kindes ein zunehmend größerer Raum zur Verfügung steht. Dies wird bei dem dargestellten Ausführungsbeispiel durch den Verlauf der Auflageflächen 13 und 14 auf den Armlehnen 6 und 7, durch den Ort, an dem die Armlehnen 6 und 7 in die Ausnehmung 8 und 9 übergehen, sowie den Verlauf von deren rückwärtiger Kante, maßgebend jedoch von dem Verlauf der Auflageflächen 16 und 17 an der Unterseite des Tischteiles festgelegt. Die Auflageflächen 16 und 17 bestehen, von der Vorderseite 25 des Sitzkissens aus gerechnet aus einem geradlinigen Bereich 34, der bezogen auf die Ebene des Spieltisches 23 leicht schräg nach oben verläuft und in einem Abstand von der Unterseite des Tischteils 15 beginnt. Der geradlinige Bereich mündet über einen konkaven bzw. eingezogenen Bereich 35, der etwa unter der rückwärtigen Begrenzungsfläche 31 der Aussparung 26 liegt, in einem abgerundeten bis nahezu an die Unterkante des Tischteils 15 herabreichenden Bereich 36, dessen Scheitel den tiefsten Punkt der Führungsfläche festlegt. Auf diese Weise entsteht ein Verlauf, der einer halbmondförmigen Abwicklung entspricht.

Eine Arretierung des Tischteils 15 in jeder beliebigen Lage längs der Armlehnen 6 und 7 kann dadurch vorgenommen werden, daß die Auflageflächen 13 und 14 bzw. 16 und 17 mit kletthaftfähigen Bereichen 37 und/oder Klettbandstreifen 38 versehen sind, wobei diese im Bereich der Armlehnen 6 und 7, wie in Fig. 6 angedeutet, dadurch verstellbar sind, daß diese selbst auf der Oberseite eines Streifens angebracht sind, der am oberen Rand der Armlehnen 6 und 7 lösbar gehaltert ist, beispielsweise mittels pratzenförmiger Fortsätze 39, die auf ihrer Unterseite Klettbandstücke tragen, welche eine Haftung mit einem textilen Bezug des Sicherheitssitzes vermitteln. Auf diese Weise kann erreicht werden, daß die jeweils nicht zur Arretierung des Tischteils 15 dienenden Bereiche der Oberkanten der Armlehnen 6 und 7 glatt verbleiben können, so daß nicht Fremdstoffe, wie Kleidungsstücke einer Bedienungsperson oder des Kindes dort versehentlich haften bleiben können.

Bei der in den Fig. 8 bis 10 dargestellten Variante des Kinder-Sicherheitssitzes 1 sind die Auflageflächen 13' und 14' in Art einer Nockenfläche ausgebildet, die im vorderen Bereich 40 geradlinig verläuft und im Bereich ihres rückwärtigen Endes, angrenzend zu der Ausnehmung 9 eine abgerundete Erhebung 41 enthält. Mit den Nockenflächen 13', 14' stehen als Nockenfolgerflächen ausgebildete Auflageflächen 16', 17' an der Unterseite des Tischteils 15' in Eingriff, welche ähnlich ausgebildet sind wie die Auflageflächen 16 und 17 der in Fig. 1 bis 4 gezeigten Ausführungsform, jedoch insgesamt flacher verlaufen. An einen zu vorderst belegenen konvex-gekrümmten Bereich 42 schließt sich ein konkav-gekrümmter Bereich 43 an, der in einem zweiten konvex-gekrümmten Bereich am rückwärtigen Ende des Tischteils 15' endet, wobei dessen Scheitel am tiefsten Punkt der Führungsfläche 16' bzw. 17' festlegt. Abgesehen von dieser abgewandelten Ausgestaltung der miteinander in Eingriff tretenden Auflageflächen 13', 14' und 16', 17', entspricht der in den Fig. 8 bis 10 dargestellte Kinder-Sicherheitssitz dem in den Fig. 1 bis 4 dargestellten Beispiel, so daß hierauf im einzelnen nicht einzugehen ist. Auch hier ergibt sich eine Zunahme des lichten Abstands zwischen Tischteil 15' und Sitzfläche 11 mit zunehmender Nachvorneverschiebung des Sitzteiles 15', wie dies aus dem Vergleich der Abstände A8, A9 und A10 der Figuren 8 bis 10 ergibt, wobei die Stelle, an der der minimale Abstand liegt, sich ebenfalls zunehmend nach vorne verschiebt. Eine entsprechende Zunahme des freien Abstands zwischen der Unterseite des Tischteiles und der Sitzfläche ergibt sich auch bei der in den Figuren 11 bis 13 dargestellten weiteren Variante des Kinder-Sicherheitssitzes, wie die dort mit A11 bis A13 angedeuteten

0170733

Abstände anzeigen. Bei dieser Ausführungsform sind die von den Oberkanten der Armlehnen 6 und 7 gebildeten Auflageflächen 13", 14" geradlinig ausgebildet, wobei diese jedoch, bezogen auf die Grundfläche des Sitzes nach vorne schräg ansteigen. Die an der Unterseite des Tischteils 15" angebrachten Auflageflächen 16", 17" verlaufen ebenfalls geradlinig und zwar schräg zu der Fläche des Spieltisches 23 vom rückwärtigen Ende nach vorne ansteigend. Auf diese Weise entstehen zwei miteinander in Wirkverbindung tretende Keilflächen, welche erreichen, daß bei zunehmender Nachvorne-Verschiebung des Tischteils 15" die Abstände zwischen dessen Unterseite und der Sitzfläche 11 in der oben erwähnten Weise zunehmen. Da der Kinder-Sicherheitssitz der Fig. 10 bis 13 bezüglich seiner sonstigen Details mit denen des in den Fig. 1 bis 4 gezeigten Ausführungsbeispiels übereinstimmt, erübrigt es sich hierauf nochmals einzugehen.

Im folgenden wird eine weitere Variante des Kinder-Sicherheitssitzes anhand der Figuren 7 und 15 näher erläutert. An dem vorderen Rand der Seitenwand 4 ist ein Streifen 45 angebracht, der eine Reihe von seitlichen voneinander beabstandeten fingerartigen Fortsätzen 46 enthält, welche an ihrer Unterseite ein Klettband 47 aufweisen, welches auch, wie durch das Bezugszeichen 48 angedeutet, auf der Unterseite des Streifens 45 angebracht sein kann. Der Streifen 45 trägt nahe beider Enden je einen Knebel 49 bzw. 50, dessen freies Ende nach oben vorsteht. Ein Streifenteil 51 ist mittels einer nicht gezeigten Öse in den Knebel 49 eingehängt. Eine am entgegengesetzten Ende des Streifenteils 51 angebrachte Öse 52 kann über das freie Ende des Knebels 49 gestülpt werden, so daß der Streifen 45 und das Streifenteil 51 eine Schlaufe festlegt, die beliebig geöffnet und geschlossen werden kann. Die Schlaufe dient zur Führung eines Schultergurtbandteiles, wie dies in Fig. 7 gezeigt ist. Nachdem der Streifen 45 durch Lösen der Fortsätze 46 von dem textilen Überzug des Sicherheitssitzes abgenommen und an beliebig anderen Stellen längs der Seitenwände 4 oder 5 neu angebracht werden kann, läßt sich die Führung stufenlos beliebig verstellen und an eine Verwendung mit Sicherheitsgurten anpassen, bei denen der Umlenkbeschlag für das Schultergurtteil links oder rechts zu dem Sitz liegt. Wenn die Vorderkante der Seitenwände 4 und 5, wie vorstehend im Zusammenhang mit dem Ausführungsbeispiel der Fig. 1 bis 4 erläutert, mit zunehmender Höhe weiter nach vorne vorspringt, ermöglicht auch dies eine zusätzliche Anpassung an unterschiedliche Größen von durch den Sicherheitssitz aufzunehmenden Kindern. Der Bereich der Seitenwände, an dem die Führung vorgesehen oder anbringbar ist, kann dabei auch erheblich gekrümmt sein, was aus der Darstellung von Fig. 15 ersichtlich wird, da durch die Befestigung mittels der voneinander beabstandeten Fortsätze 46 der Streifen 45 sich auch an stärker gekrümmte Fläche anpaßt.

Fig. 14 zeigt eine weitere Variante für den Kinder-Sicherheitssitz, bei dem ein Tischteil 55 verwendet wird, dessen oberer Bereich einschließlich der Auflageflächen in entsprechender Weise, wie bei einem der vorstehend beschriebenen Ausführungsbeispiele, gestaltet ist, bei dem jedoch der zwischen den Armlehnen herabragende Bereich 56 eine Reihe von seiner Vorderseite 57 ausgehender Schlitze 58 bis 61 aufweist, die sich über die gesamte Breite des herabragenden Bereichs 56 erstrecken und kurz vor dessen rückwärtigen Ende enden. In die Schlitze sind tafelförmige Abstandselemente 62 einschiebbar, wobei diese mittels Noppen 63 in kongruenten, nicht gezeigten Ausnehmungen verriegelbar sind. Die Anzahl der in die Schlitze 58 bis 61 eingebrachten Abstandselemente 62 bestimmt die Dicke des zwischen den Armlehnen herabragenden Teils 56 des Tischteils 55 und ermöglicht somit eine Anpassung an Kinder unterschiedlicher Größe, wobei in allen Fällen sichergestellt ist, daß die Kinder nicht zwischen dem Tischteil 55 und der Sitzfläche 11 hindurchrutschen können. Der gefürchtete Submarining-Effekt wird daher sicher vermieden. Das Tischteil 55 ist zweckmäßigerweise mit einer nicht-gezeigten, abnehmbaren Umhüllung versehen, in der Regel aus einem elastisch nachgiebigen textilen oder Kunststoffmaterial, das ggf. im Bereich der Auflageflächen kletthaftfähige Bereiche oder Einsätze enthält.

Der Kinder-Sicherheitssitz kann neben einem vorzugsweise abnehmbaren Überzug auch Polsterelemente enthalten oder Einlagestreifen, welche den seitlichen Abstand zwischen den Seitenwänden 4 und 5 verringern und herausnehmbar sind, wenn das von dem Sicherheitssitz aufzunehmende Kind größer bzw. breiter geworden ist.

Der Kinder-Sicherheitsitz läßt sich mit den verschiedensten in einem Kraffahrzeug vorhandenen Sicherheits-Gurtsystemen , wie Statik- und Automatikgurten und diese als Becken-oder Dreipunktgurtsysteme,wirksam verwenden.

Fig. 4 zeigt beispielshalber die Verwendung mit einem Automatik-Dreipunkt-Sicherheitsgurt, der in einem Kraftfahrzeug vorhanden und lediglich schematisch angedeutet ist. Von einer Gurtaufwickeltrommel 65 verläuft das im Normalfalle als Beckengurt verwendete Gurtteil 66 durch die Aussparung 26 in dem Tischteil 15, wobei es an der rückwärtigen Begrenzungsfläche 31 anliegt.  Es läuft lose durch eine Schloßplatte 67, die in einem mit dem Kraftfahrzeug nicht näher befestigten Schloß 68 einrastbar ist. Ein sich von der Schloßplatte 67 aus zu einem Umlenkbeschlag 69 erstreckendes Schultergurtteil 70 verläuft hinter der Rückenlehne 3 des Sicherheitssitzes zu einem Umlenkbeschlag 69. Das von dem Umlenkbeschlag 69 zu der Gurttrommel 65 verlaufende Gurtbandstück 71 wird von der Gurttrommel 65 straff gehalten. Ein von dem Sicherheitssitz aufenommenes Kleinkind wird daher von dem Tischteil 15 auch im Falle eines Unfalls sicher festgehalten, ohne daß es dabei direkt in Körperkontakt mit den Gurtbändern treten kann. Dies wird bei Kleinkindern von einer Reihe von Fachleuten für besonders günstig erachtet.

Das in Fig. 7 gezeigte Gurtsystem entspricht im wesentlichen demjenigen der Figur 4, wobei jedoch in diesem Falle das Schultergurteil 70' an der Vorderseite des Sicherheitssitzes vorbei durch die von dem Streifen 45 und dem Streifenteil 51 gebildete Schlaufe lose hindurchgeführt ist. Diese Verwendung des Sicherheitssitzes wird bei größeren Kindern bevorzugt, da hier das Schulterschrägband 70' in der der Schulterhöhe des Kindes entsprechenden Lage einen zusätzlichen Halt liefert und im Falle eines Unfalls einem Nachvorneklappen des Oberkörpers Einhalt gebietet. Der hierbei im Schulter- und Brustbereich auftretende Körperkontakt wirkt bei diesen größeren Kindern auch im Falle eines Unfalls nicht störend, da der Gurt in der richtigen Höhe geführt ist.

In Fig. 6 ist eine weitere Möglichkeit gezeigt, bei der der Kinder-Sicherheitssitz lediglich von einem Zweipunkt-Beckengurt 73 gehalten ist, der auf einer Gurttrommel 74 aufgewickelt ist und von dieser abgezogen werden kann. Das freie Ende des Beckengurts 73 ist in einer Schloßplatte 75 befestigt, die von einem Schloß 76 lösbar aufgenommen wird, welches über einen Peitschenteil 77, in nicht näher beschriebener Weise im Kraftfahrzeug befestigt ist. Der Beckengurt 73 ist hier in der gleichen Weise in die Aussparung 26 eingelegt, wie das Beckengurtteil 66 bei der in Fig. 4 gezeigten Anordnung, so daß hierauf nicht näher eingegangen werden muß.

Der Kinder-Sicherheitssitz nach jeder der gezeigten Ausführungsformen wird lose auf den Sitz des Fahrzeugs gestellt. Nach Abnahme des Tischteils wird das Kind in den Sitz hineingesetzt. Sobald dann das Tischteil ggf. durch Herausnehmen oder Einbringen zusätzlicher Abstandselemente 62 an die Größe des aufzunehmenden Kindes angepaßt ist und nachdem ggf. der Streifen 45 für die Schultergurtführung in die der Schulterhöhe des Kinds entsprechende Lage versetzt wurde, wird das Tischteil wieder aufgesetzt, so daß es dem Kind einen gewissen Bewegungsspielraum erlaubt. Anschließend wird das Beckengurtteil in die Aussparung 26 eingelegt. Bei einer Verwendung von Dreipunktgurten wird das Schultergurtteil in die von dem Streifen 45 und dem Streifenteil 51 gebildete Schlaufe eingelegt, wobei das nahe dem Umlenkbeschlag 67 befindliche Ende durch die Aussparung 8 oder 9 geführt wird. Es ist dann lediglich notwendig, die Schloßplatte 67 bzw. 75 in das Schloß 68 bzw. 76 einzuführen und das Beckengurtteil ggf. etwas nachzuspannen, damit der erwünschte sichere Schutz gewährleistet ist. Das Aussteigen des Kindes erfolgt in umgekehrter Weise. Auch wenn kein Kind mit dem Fahrzeug mitgeführt wird, kann der Sicherheitssitz im Fahrzeug verbleiben, wobei er durch das Gurtsystem in entsprechender Weise gehaltert ist, wie in dem Falle, daß von dem Sicherheitssitz ein Kind aufgenommen ist.

0170733

DIEHL & PARTNER

Patentanwälte · european Patent Attorneys

Kanzlei/Office:
Hilzingerstraße 12 · D 8000 München 19

15. Juni 1984 D/ze.
S 4185-D

Curt Würstl

Vermögensverwaltungs

GmbH & Co. KG

Schaumbergstr. 8

8670 Hof/Saale

K I N D E R - S I C H E R H E I T S S I T Z

Patentansprüche

1. Kinder-Sicherheitssitz mit nach vorne weisenden Seitenwänden, die als Armlehnen ausgebildet sind oder in solche münden und eine Führung für ein abnehmbares prallkissenartig ausgebildetes Tischteil enthalten, das sich zwischen den Armlehnen erstreckt und längs desselben verschiebbar ist sowie mit Mitteln zur Halterung des Tischteiles und zur Befestigung des Sicherheitssitzes auf dem Sitz eines Fahrzeugs unter Verwendung des an diesem vorhandenen Sicherheits-Gurtsystems, dadurch g e k e n n - z e i c h n e t, daß die miteinander in Eingriff stehenden Führungen (13,14,16,17) an dem Tischteil (15, 55) und den Armlehnen (6, 7) die Verschiebungsbahn des Tischteils (15, 55) längs der Armlehnen (6,7) derart festlegen, daß der minimale lichte Abstand (A) zwischen der Unterseite des Tischteils (15; 55) und der die Beine bzw. das Gesäß des Kindes aufnehmenden Sitzfläche (11) umso größer ist, je weiter das Tischteil (15;55) nach vorne verschoben ist, und/oder daß das Tischteil (55) an seinem zwischen den Armlehnen (6,7) herabgezogenen Bereich (56) zumindest' ein entfernbares Abstandselement (62) enthält.

2. Kinder-Sicherheitssitz nach Anspruch 1, dadurch g e - k e n n z e i c h n e t , daß nach oben gerichtete Flächen der Armlehnen (6,7) Auflagebereiche (13, 14) für das Tischteil (15) festlegen und daß die Auflagebereiche (13, 14) an den Armlehnen (6, 7) und/oder die mit diesen in Eingriff tretenden Bereiche (16, 17) des Tischteils (15) derart geformt sind, daß sich der lichte Abstand (A) zwischen der Unterseite des Tischteils (15) und der Sitzfläche (11) bei einer Verschiebung des Tischteiles in der genannten Weise kontinuierlich ändert.

3. Kinder-Sicherheitssitz nach Anspruch 1 oder 2, da-durch g e k e n n z e i c h n e t , daß das Tischteil (15) als quaderförmiges, eigensteifes Polster ausgebildet ist, das eine von dessen Vorderseite (25)ausgehende und über die gesamte Breite desselben verlaufende Aussparung (26) enthält, zur Aufnahme eines Gurtbandstückes (66; 73), welches den Beckengurtteil eines Sicherheitsgurtes des Fahrzeugs bildet oder mit diesem verbindbar ist.

4. Kinder-Sicherheitssitz mit nach vorne weisenden Seitenwänden, die als Armlehnen ausgebildet sind oder in solche münden, wobei nach oben gerichtete Flächen der Armlehnen Auflagebereiche für ein abnehmbares prallkissenartig ausgebildetes Tischteil festlegen, das sich zwischen den Armlehnen erstreckt, sowie mit Mitteln zur Festlegung des Tischteils an verschiedenen Stellen längs der Armlehnen und mit Mitteln zur Befestigung des Sicherheitssitzes auf dem Sitz eines Fahrzeugs unter Verwendung des an diesem vorhandenen Sicherheits-Gurtsystems, dadurch g e k e n n z e i c h n e t , daß das Tischteil (15) als quaderförmiges, eigensteifes Polster ausgebildet ist, das eine von dessen Vorderseite (25) ausgehende und über die gesamte Breite desselben verlaufende Aussparung (26) enthält, zur Aufnahme eines Gurtbandstückes (66; 73), welches den Beckengurtteil eines Sicherheitsgurtes des Fahrzeugs bildet oder mit diesem verbindbar ist.

5.   Kinder-Sicherheitssitz nach Anspruch 4, dadurch g e k e n n z e i c h n e t , daß die Auflagebereiche (13,14) an den Armlehnen (6, 7) und/oder die mit diesen in Eingriff tretenden Bereiche (16, 17) des Tischteils (15) derart geformt sind, daß der minimale lichte Abstand (A) zwischen der Unterseite des Tischteils (15) und der die Beine bzw. das Gesäß des Kindes aufnehmenden Sitzfläche (11) zwischen den Armlehnen (6, 7) mit zunehmender Verschiebung des Tischteils (15), ausgehend von einer rückwärtigen Endlage, relativ zu den Armlehnen (6, 7) kontinuierlich zunimmt, und/oder daß das Tischteil (55) an einem zwischen den Armlehnen (6, 7) herabgezogenen Bereich (56) zumindest ein entfernbares Abstandselement (62) enthält.

6.   Kinder-Sicherheitssitz nach einem der vorstehenden Ansprüche und mit einer Kopf- und Rückenstütze (3), dadurch g e k e n n z e i ch n e t , daß an dem vorderen Randbereich zumindest einer der an beiden Seiten der Rückenstütze (3) vorstehenden Seitenwände (4, 5) eine Führung (45, 51) zur losen Aufnahme eines Schultergurtbandes (70) von einem Sicherheitsgurt des Fahrzeugs vorgesehen oder anschließbar ist.

7. Kinder-Sicherheitssitz nach Anspruch 6, dadurch g e k e n n z e i c h n e t , daß die Führung (45, 51), vorzugsweise kontinuierlich, höhenverstellbar ausgebildet ist.

8. Kinder-Sicherheitssitz mit einer Kopf- und einer Rückenstütze und nach vorne weisenden Seitenwänden, die als Armlehnen ausgebildet sind oder in solchen münden, wobei nach oben gerichtete Flächen der Amrlehnen Auflagebereiche für ein abnehmbares prallkissenartig ausgebildetes Tischteil festlegen, das sich zwischen den Armlehnen erstreckt und längs desselben verschiebbar ist, sowie mit Mitteln zur Befestigung des Sicherheitssitzes auf dem Sitz eines Fahrzeugs unter Verwendung des an diesem vorhandenen Sicherheits-Gurtsystems, dadurch g e k e n n z e i c h n e t , daß das Tischteil (15) als quaderförmiges, eigensteifes Polster ausgebildet ist,das eine von dessen Vorderseite (25) ausgehende und über die gesamte Breite desselben verlaufende Aussparung (26) enthält, zur Aufnahme eines Gurtbandstückes (66; 73), welches den Beckengurtteil eines Sicherheitsgurtes des Fahrzeuges bildet oder mit diesem verbindbar ist, und daß an dem vorderen Randbereich zumindest einer der an beiden Seiten der Rückenstütze (3) vorstehenden Seitenwände (4, 5) eine höhenverstellbare Führung (45, 51) zur losen Aufnahme eines Schultergurtbandes (70) vorgesehen oder anschließbar ist.

9. Kinder-Sicherheitssitz nach Anspruch 1 oder 8, dadurch g e k e n n z e i c h n e t , daß Mittel (37, 38) vorgesehen sind, welche das Tischteil an unterschiedlichen Stellen längs der Armlehnen (6, 7) arretierbar halten.

10. Kinder-Sicherheitssitz nach Anspruch 8 oder 9, dadurch g e k e n n z e i c h n e t , daß die Führung (45, 51) kontinuierlich verstellbar ist.

11. Kinder-Sicherheitssitz nach einem der Ansprüche 6 und folgende, dadurch g e k e n n z e i c h n e t, daß die Führung für das Schultergurdband von einer zu öffnenden Schlaufe (45, 51) gebildet ist.

12. Kinder-Sicherheitssitz nach einem der Ansprüche 6 bis 11, dadurch g e k e n n z e i c h n e t, daß die Führung auf einem Streifen (45) angebracht ist, der mittels eines Klettbandes (47, 48) an beliebigen Stellen des vorderen Randbereiches der Seitenwände (4, 5) lösbar befestigbar ist.

13. Kinder-Sicherheitssitz nach Anspruch 12, dadurch g e k e n n z e i c h n e t, daß der Streifen (45) fingerartige seitliche Fortsätze (46) enthält, die auf ihrer Unterseite ein Klettband (46) tragen oder bilden.

14. Kinder-Sicherheitssitz nach einem der Ansprüche 11 bis 13, dadurch g e k e n n z e i c h n e t, daß die Schlaufe von dem Streifen (45) und einem auf dessen Oberfläche lösbar befestigten Streifenteil (51) gebildet ist.

15. Kinder-Sicherheitssitz nach einem der Ansprüche 7 bis 14, dadurch g e k e n n z e i c h n e t , daß der vordere Rand zumindest derjenigen der beiden Seitenwände (4, 5) an dem die Führung (45, 51) vorgesehen oder anbringbar ist, im Verstellbereich der Führung (45, 51) in Richtung auf das obere Ende des Sitzes bezüglich dessen Rückenlehne (3) nach vorne geneigt verläuft.

16. Kinder-Sicherheitssitz nach einem der Ansprüche 8 bis 15, dadurch g e k e n n z e i c h n e t , daß die Auflagebereiche (13, 14) an den Armlehnen (6, 7) und/oder die mit diesen in Eingriff tretenden Bereiche (16, 17) des Tischteils (15; 55) derart geformt sind, daß der minimale lichte Abstand (A) zwischen der Unterseite des Tischteils (15, 55) und der die Beine bzw. das Gesäß des Kindes aufnehmenden Sitzfläche (11) umso größer ist, je weiter das Tischteil (15; 55) zwischen den Armlehnen (6,7) nach vorne verschoben ist, und/oder daß das Tischteil (55) an seinem zwischen den Armlehnen herabgezogenen Bereich (56) zumindest ein entfernbares Abstandselement (62) enthält.

17. Kinder-Sicherheitssitz nach einem der Ansprüche 3 bis 16, dadurch g e k e n n z e i c h n e t, daß die Aussparung (26) in dem Tischteil (15) eine nach vorne gewölbte und zumindest unten abgerundete rückwärtige Begrenzungsfläche (31) aufweist, an der das Gurtband anliegt, und/oder zumindest im Randbereich nach unten gewölbt verläuft und/oder an beiden Seiten (27, 28) bis in die Nähe der Rückseite (24) heranreicht.

18. Kinder-Sicherheitssitz nach einem der vorstehenden Ansprüche, dadurch g e k e n n z e i c h n e t, daß die Unterseite des Tischteils (15) in der Mitte eine Ausbuchtung (33) aufweist und/oder daß die Rückseite (24) des Tischteils (15) kreisbogenförmig oder oval ausgeschnitten ist.

19. Kinder-Sicherheitssitz nach einem der vorstehenden Ansprüche, dadurch g e k e n n z e i c h n e t, daß er einen schalenförmigen mittig mit einer Erhebung (12) versehenen und am vorderen Rand nach unten abgebogenen Bodenbereich (10) aufweist.

20. Kinder-Sicherheitssitz nach einem der vorstehenden Ansprüche, dadurch g e k e n n z e i c h n e t, daß die Mittel zur Arretierung des Tischteils (15) an den Armlehnen (6, 7) kletthaftfähige Bereiche (37) und Klettbandstreifen (38) enthalten, die im Bereich der miteinander in Eingriff bringbaren Stellen der Unterseite des Tischteiles (15) und der Armlehnen (6,7) angebracht sind.

21. Kinder-Sicherheitssitz nach Anspruch 20, dadurch g e k e n n z e i c h n e t , daß der haftungsver-mittelnde kletthaftfähige Bereiche (37) oder die Klettbandstreifen (38) an den Armlehnen (6, 7) längs derselben versetzbar gehaltert sind.

22. Kinder-Sicherheitssitz nach einem der vorstehenden Ansprüche, dadurch g e k e n n z e i c h n e t , daß die Oberseiten der Armlehnen (6, 7) und die damit in Berührung bringbaren Flächen des Tischteils (15) ebene Anlageflächen (14", 17") bilden, die eine zur Vorderseite des Sitzes hin ansteigende Verschiebungsebene festlegen (Fig. 11 bis Fig. 14).

23. Kinder-Sicherheitssitz nach einem der Ansprüche 1 bis 21, dadurch g e k e n n z e i c h n e t , daß die Oberseiten der Armlehnen (6, 7) und die damit in Berührung bringbaren Flächen des Tischteils (15) als Nocken- (14') und Nockenfolgerflächen (17') ausgebildet sind (Fig. 8 bis Fig. 10).

24. Kinder-Sicherheitssitz nach einem der vorstehenden Ansprüche, dadurch g e k e n n z e i c h n e t , daß zwischen den Armlehnen (6,7) und den Seitenwänden (4, 5) Aussparungen (8,9) vorgesehen sind, die sich nach unten konisch verjüngen und an ihrem Bodenbereich (22) eine Breite aufweisen, welche der Breite der zur Halterung des Kinder-Sicherheitssitzes verwendeten Gurtbänder entspricht.

25. Kinder-Sicherheitssitz nach Anspruch 24, dadurch g e k e n n z e i c h n e t , daß der Bodenbereich (22) der Aussparungen nach rückwärts ansteigt und mit der durch die Grundfläche des Kinder-Sicherheitssitzes festgelegten Ebene einen Winkel von 10 bis 25$^{\circ}$, vorzugsweise ca. 15$^{\circ}$ einschließt (Fig. 16).

26. Kinder-Sicherheitssitz nach Anspruch 24 oder 25,

dadurch g e k e n n z e i c h n e t, daß der Bodenbereich (22) der Aussparung (8, 9) zu der dieselbe vorne begrenzenden Rückseite (19) der Armlehne (6, 7) etwa lotrecht verläuft und vorzugsweise mit dieser einen Winkel von 90 bis 95$^{\circ}$ einschließt (Fig. 16).

27. Kinder-Sicherheitssitz nach einem der Ansprüche 24 bis 26, dadurch g e k e n n z e i c h n e t, daß der Bodenbereich (22) der Aussparungen (8, 9) mit den dieselben hinten begrenzenden unteren Enden (21) der Vorderkanten der Seitenwände (4, 5) einen stumpfen Winkel einschließen, der vorzugsweise zwischen 105 und 125$^{\circ}$ beträgt (Fig. 16).

28. Kinder-Sicherheitssitz nach einem der Ansprüche 23 bis 27, dadurch g e k e n n z e i c h n e t, daß die Oberseite (13', 14') der Armlehnen (6, 7) im vorderen Bereich (40) geradlinig verlaufen und im Bereich ihrer rückwärtigen Enden, angrenzend zu den Aussparungen (8,9) je eine Erhebung (41) enthalten, und daß die damit in Eingriff bringbaren Führungsflächen (16',17') an der Unterseite des Tischteils (15) im Mittelbereich (43) eingezogen sind und am rückwärtigen Ende (44) am weitesten herabreichen (Fig. 8 bis Fig. 10).

29. Kinder-Sicherheitssitz nach einem der Ansprüche 23 bis 27, dadurch g e k e n n z e i c h n e t, daß die Oberseiten (13, 14) der Armlehnen (6, 7) geradlinig verlaufen und daß die damit in Eingriff bringbaren Führungsflächen (16, 17) an der Unterseite des Tischteils (15) im Mittelbereich (35) eingezogen sind und am rückwärtigen Endbereich (36) am weitesten herabreichen (Fig. 1 bis Fig. 3).

30. Kinder-Sicherheitssitz nach Anspruch 28 oder 29, dadurch g e k e n n z e i c h n e t, daß die Führungsflächen (16, 17) an der Unterseite des Tischteiles (15) eine halbmondförmige Abwicklung bilden.

31. Kinder-Sicherheitssitz nach Anspruch 28 oder 29, dadurch g e k e n n z e i c h n e t, daß die Führungsflächen (16, 17) an der Unterseite des Tischteils (15) einen an die Vorderseite desselben angrenzenden ersten konvex-gekrümmten Bereich (34) aufweisen, an den sich ein im Mittelbereich des Tischteiles (15) gelegener konkav-gekrümmter Bereich (35) anschließt und an diesen ein zweiter konvex-gekrümmter Bereich (36) am rückwärtigen Ende des Tischteils , dessen Scheitel den tiefsten Punkt der Führungsflächen bildet (Fig. 1 bis Fig. 3).

32. Kinder-Sicherheitssitz nach einem der vorstehenden Ansprüche, dadurch g e k e n n z e i ch n e t, daß das Tischteil (55) eine Umhüllung enthält, die dieses und das zumindest ein an der Unterseite des Tischteils anbringbares Abstandselement (62) zu einer Einheit umschließt.

33. Kinder-Sicherheitssitz nach einem der vorstehenden Ansprüche, dadurch g e k e n n z e i c h n e t, daß das Tischteil (55) an seinem zwischen den Armlehnen herabgezogenen Bereich (56) von der Vorder- oder Rückseite ausgehende Schlitze (58 - 61) aufweist, welche die Einbringung tafelförmiger Abstandselemente (62) ermöglichen.

34. Kinder-Sicherheitssitz nach Anspruch 32 oder 33, dadurch g e k e n n z e i ch n e t, daß die Abstandselemente (62) miteinander und/oder mit dem herabgezogenen Bereich (56) des Tischteils verriegelbar sind.

Fig. 1

Fig. 2

S 4185-D

**Fig. 3**

**Fig. 4**

**Fig. 5**

**Fig. 6**

*Fig. 7*

**Fig. 8**

**Fig. 9**

*Fig. 10*

*Fig. 11*

**Fig. 12**

**Fig. 13**

0170733

S 4185-D

**Fig. 14**

**Fig. 15**

**Fig.16**

14

5

7

21

19

22

α

β

γ

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-U-7 907 643 (STAKUPRESS GESELLSCHAFT FÜR STAHL- UND KUNSTSTOFFVERARBEITUNG) * Figur 1 * | 1,3,4 | B 60 N 1/12 B 60 R 22/10 |
| A | DE-U-8 219 196 (H. MOTHES) * Figur 1 * | 1,3,4 | |
| A | DE-A-3 107 752 (VOLKSWAGENWERK) * Figur 1 * | 1,3,4 | |
| A | DE-U-8 325 796 (M.A. HAGENBÄUMER) * Figur * | 16,32 | |
| A | DE-U-7 147 785 (H. RÖMER) * Figur 1, Bezugszeichen 20 * | 19 | **RECHERCHIERTE SACHGEBIETE (Int. Cl.4)** |
| D,A | DE-C-2 923 125 (CURT WÜRSTL VERMÖGENSVERWALTUNGSGESELLSCHAFT) | | B 60 N 1/00 B 60 R 22/00 A 62 B 35/00 A 47 D 1/00 |
| D,A | DE-A-2 923 126 (SITEX AUTOZUBEHÖR CURT WÜRSTL) | | |

Der vorliegende Recherchenbericht wurde für alle Patentansprüche erstellt.

| Recherchenort | Abschlußdatum der Recherche | Prüfer |
|---|---|---|
| BERLIN | 13-09-1985 | BECKER W D H |